Europäisches Patentamt

European Patent Office

Office européen des brevets

(19)

(11) Veröffentlichungsnummer: **0 099 016**
**A2**

(12) **EUROPÄISCHE PATENTANMELDUNG**

(21) Anmeldenummer: **83106230.2**

(22) Anmeldetag: **27.06.83**

(51) Int. Cl.³: **B 32 B 27/28**

(30) Priorität: **10.07.82 DE 3225886**

(43) Veröffentlichungstag der Anmeldung:
**25.01.84 Patentblatt 84/4**

(84) Benannte Vertragsstaaten:
**CH DE FR GB IT LI NL**

(71) Anmelder: **BAYER AG**
**Zentralbereich Patente, Marken und Lizenzen**
**D-5090 Leverkusen 1, Bayerwerk(DE)**

(72) Erfinder: **Hocker, Jürgen, Dr.**
**Eichenweg 6**
**D-5060 Bergisch-Gladbach 2(DE)**

(54) **Mehrschichten-Flächengebilde.**

(57) Mehrschichten-Flächengebilde aus mindestens zwei Schichten, von denen mindestens eine aus gegebenenfalls dotiertem Polyparaphenylen besteht, sowie Verfahren zu ihrer Herstellung.

EP 0 099 016 A2

0099016

BAYER AKTIENGESELLSCHAFT      5090 Leverkusen, Bayerwerk

Zentralbereich

Patente, Marken und Lizenzen      G/Hed/Rz

## Mehrschichten-Flächengebilde

Die Erfindung betrifft ein Mehrschichten-Flächengebilde mit mindestens einer Schicht aus Polyparaphenylen, sowie ein Verfahren zu seiner Herstellung.

Polyparaphenylen hat in den letzten Jahren Bedeutung als alektrisch leitfähiges Material gewonnen. Es läßt sich nach literaturbekannten Methoden (P. Kovacic u. J.Oziomek, J. Org. Chem. Vol. 29, 100, 1963) herstellen und fällt als unlösliches und unschmelzbares dunkles Pulver an, das praktisch nicht verarbeitbar ist. Für manche Anwendungen ist es möglich, das Pulver zu Formteilen zusammenzupressen, die jedoch nur geringe mechanische Festigkeiten besitzen.

Gegenstand der Erfindung sind Mehrschichten-Flächengebilde, die wenigstens eine Schicht aus gegebenenfalls dotiertem Polyparaphenylen und wenigstens eine Trägerschicht aus einem gegenüber Polyparaphenylen inerten festen Material aufweisen.

Ein weiterer Gegenstand der Erfindung ist ein Verfahren zur Herstellung solcher Mehrschichten-Flächengebilde (Laminate),

Le A 21 849 - Europa

in welchem man auf eine inerte feste Trägerschicht eine Suspension von Polyphenylenpartikeln in einem Suspensionsmittel aufbringt und das Suspensionsmittel anschließend entfernt. Ebenfalls Gegenstand der Erfindung ist die Verwendung der Mehrschichten-Flächengebilde als elektrische Flächenleiter oder Elektroden.

Das Design der Flächengebilde richtet sich nach den jeweiligen Anwendungszwecken und kann z.B. so gestaltet werden, daß die Flächengebilde mechanisch besonders beanspruchbar sind, oder die Polyparaphenylen-Schicht vor dem schädlichen Einfluß des Luftsauerstoffs geschützt ist, so daß insgesamt ein Eigenschaftsbild entsteht, über das Polyparaphenylen allein nicht verfügt. So erzielt man durch den Verbund von Polyparaphenylen mit anderen elektronisch aktiven Materialien wie z.B. Metalle, Halbleiter oder Photoleiter verbesserte und zusätzliche elektronische Eigenschaften, die für viele Anwendungszwecke außerordentlich nützlich sind oder diese überhaupt erst ermöglichen.

Für eine Beschichtung mit Polyparaphenylen kommen beispielsweise Folienmaterialien in Frage. Besonders bevorzugt sind Beschichtungen auf Metall wie Al, Cu, Sn, Ni, Polyolefine wie Polyethylen, Polypropylen, halogenierte Polyethylene wie Polyvinylchlorid, Polyvinylidenchlorid, Polyvinylidenfluorid, Polytetrafluorethylen; Polyvinylacetat, Polyvinylalkohol, Polyacetale, Polystyrol, Polyester, Polycarbonat, Polysulfone, Polyurethane, Polyamide und Cellulosederivate wie Cellulosehydrat oder

Le A 21 849

Celluloseacetat. Die Polymeren können gegebenenfalls auch als Copolymerisate vorliegen.

Geometrische Form und Ausmaße der Beschichtungen bzw. der Substrate unterliegen im Sinne der Erfindung keiner Einschränkung. Es sind sowohl kleinflächige Strukturen als auch großflächige Strukturen möglich. Besonders bevorzugt sind großflächige, folienhafte Gebilde, insbesondere Bänder beliebiger Länge und Breite.

Gegenstand der Erfindung sind auch flexible Mehrschichten-Flächengebilde aus mindestens zwei Schichten, von denen mindestens eine aus gegebenenfalls dotiertem Polyparaphenylen und mindestens eine weiter damit verbundene aus einem Folien oder Überzüge bildenden Kunststoff oder anorganischem Material besteht. Insbesondere sind Gegenstand der Erfindung solche Flächengebilde, in denen die Schicht aus Kunststoff oder anorganischem Material sauerstoffundurchlässig ist. In einer besonderen Ausführungsform ist eine Polyparaphenylenschicht auf ihrer Oberseite und auf ihrer Unterseite mit einer sauerstoffundurchlässigen Schicht aus Kunststoff oder anorganischem Material verbunden, wobei die Ränder des so gebildeten Laminats gegen Sauerstoffeinwirkung abgedichtet sind. In einer weiteren bevorzugten Ausführungsform ist eine Polyparaphenylenschicht mit einer Schicht aus einem elektrisch leitenden Kunststoff oder einem Folien oder Überzüge bildenden metallischen elektrischen Leiter oder einem anorganischen oder organischen elektrischen Halbleiter bzw. Photoleiter so verbunden, daß inniger elektrischer Kontakt besteht. In einer weiteren Ausführungsform ist das Substrat aus Kunststoff oder anorganischem Material

Le A 21 849

auf beiden Seiten mit einer Polyparaphenylenschicht versehen.

Der Vorteil der Polyparaphenylen-Laminate gegenüber dem
Polyparaphenylen-Pulver besteht nicht nur in ihrer höheren
mechanischen Festigkeit bzw. Beanspruchbarkeit und in
ihrer Schutzwirkung gegen aggressive Gase, sondern auch
in neuen elektronischen Eigenschaften, über die Polyparaphenylen alleine nicht verfügt, und die erst durch den
Verbund mit anderen halbleitenden bzw. metallisch leitfähigen Materialien zustandekommen.

In den erfindungsgemäßen Laminaten bildet die
Polyparaphenylen-Schicht mit leitfähigen organischen
oder anorganischen Materialien einen flächigen elektronischen Kontakt. Dabei kann das auf eine elektrisch
halbleitende oder leitfähige Schicht aufgebrachte Polyparaphenylen eine beliebig strukturierte Fläche bedecken
und beispielsweise die Form von Kammelektroden oder Leiterbahnen einnehmen.

Für derartige Materialien kommen beispielsweise in Frage:
leitfähige Polymere, Metalle, Halbleiter, Photoleiter
oder Feststoffelektrolyte.

Die erfindungsgemäßen Polyparaphenylen-Beschichtungen
können hergestellt werden, indem eine Polyparaphenylen-
Schicht direkt auf ein flächiges Substrat aufgetragen
wird. Für die Beschichtung eines Substrats mit Polyparaphenylen besonders geeignet ist eine stabile Suspension
aus "kletten-", faser- bzw. pulverförmigen, gegebenenfalls dotierten Polyparaphenylen-Teilchen mit einem

Le A 21 849

Durchmesser von 0,01 bis 1 mm, die man erhält, wenn man Benzol in Gegenwart eines Katalysators, wie z.B. Aluminiumtrichlorid,mit einem Oxidationsmittel, wie z.B. Kupfer-II-chlorid, umsetzt (vergl. Kovacic und Ozoimek, J. Org. Chem. Res. Vol. 29, 100 (1967)).

Die beschriebene Suspension kann, gegebenenfalls nach Entfernen des Katalysators und/oder Austausch des Lösungsmittels, auf verschiedene Weise weiterverarbeitet und verwendet werden. Sie läßt sich sehr gut auf jede beliebige Substratoberfläche aufsprühen, wobei nach Verdampfen des Lösungsmittels eine homogene, festhaftende, gegebenenfalls dotierte Polyparaphenylen-Schicht auf dem Substrat zurückbleibt. Besonders bevorzugt ist eine Ausführungsform, bei der das Suspendiermittel so gewählt wird, daß es beim Sprühvorgang die Substratoberfläche anlöst. Auf diese Weise kann eine besonders gute Haftung zwischen dem Polyparaphenylen und dem Substrat erreicht werden, so daß auch Suspensionen von pulverförmigem Polyparaphenylen zur Beschichtung eingesetzt werden können.

Entscheidendes Kriterium ist der gute Verbund zwischen der Polyparaphenylen-Schicht und dem Substrat.

Zum Versprühen geeignet sind beispielsweise Spritzpistolen mit Gasdruckantrieb. Spritzpistolen mit elektrischem Antrieb ("airless") eignen sich besonders gut für eine kontrollierte flächige Beschichtung, da die Dicke der Polyparaphenylen-Schicht genau steuerbar ist und sich ab etwa 0,01 μm nach oben variieren läßt.

Als besonders vorteilhaft für die Laminatherstellung hat sich ein Vakuumsprühverfahren erwiesen. Hierbei befin-

Le A 21 849

- 6 -

det sich das zu beschichtende Substrat in einer Unterdruckkammer, in die man die Polyparaphenylen-Suspension über eine von außen an die Kammerwand angeflanschte, modifizierte Sprühpistole hineingesprüht. Dieses Verfahren garantiert eine besonders homogene Polyparaphenylen-Beschichtung, wenn man dafür sorgt, daß das von der Substratoberfläche abdampfende Lösungsmittel, welches wieder abgepumpt wird, im Gleichgewicht steht mit der neu zugeführten Menge an Lösungsmittel. Die Wachstumsgeschwindigkeit der Polyparaphenylen-Schicht läßt sich durch Regulierung der versprühten Menge an Suspension besonders gut steuern. Das Laminat oder das Substrat wird mit geeigneter Geschwindigkeit langsam am Sprühfeld vorbeigeführt. Diese Verfahren, die auch kontinuierlich geführt werden können, garantieren eine homogene Massenbelegung des Substrates mit Polyparaphenylen. Darüberhinaus garantiert die Unterdruckkammer eine feuchte- und sauerstofffreie Umgebung.

Außer durch Sprühen oder Spritzen kann das Aufbringen der Polyparaphenylen-Suspension auch durch Gießen, Walzen, Rakeln oder Streichen erfolgen. Foliengießmaschinen und -anlagen sind zur kontinuierlichen Herstellung von Polyparaphenylen-Laminaten geeignet. Hierbei wird auf einer auf Rollen laufenden Substratfolie an einer Stelle die Suspension ständig aufgebracht. Die Substratfolie führt die Polyparaphenylen-Masse unter Glattstreichen oder Walzen durch einen Wärmeofen mit Lösungsmitteldampfabsaugung hindurch.

Die beschriebenen Beschichtungstechniken erlauben eine homogene Verteilung der Polyparaphenylen-Masse auf der

Le A 21 849

Substratoberfläche. Die Dosierung bzw. Einstellung der Schichtdicke ist durch die Regulierung der Auftragsmenge gut möglich.

Die so hergestellten beschichteten Substrate können nun ihrerseits mit anderen Kunststoffen oder anorganichen Materialien so beschichtet werden, daß die zweite Beschichtung in innigem, gegebenenfalls elektronischem Kontakt mit der Polyparaphenylen-Schicht steht.

So ist es z.B. möglich, ein nach einem beliebigen Verfahren hergestelltes, mit gegebenenfalls dotiertem Polyparaphenylen beschichtetes Substrat mit einem Polymeren bzw. einer Polymervorstufe zu lackieren, wobei die Polymervorstufe nach dem Auftrag in einer Folgereaktion zu einem durchgehenden Überzug polymerisiert.

Nach einem anderen Verfahren kann man ein Polyparaphenylenbeschichtetes Substrat mit einem beliebigen Folienmaterial kaschieren, gegebenenfalls unter Druck, bei erhöhter Temperatur oder unter Verwendung eines Klebemittels, oder mit einer Gießfolie beschichten.

Auch eine einseitige Metallisierung der Polyparaphenylenschicht ist Gegenstand der Erfindung. Dabei kann die Metallisierung nach verschiedenen Verfahren erfolgen:

Beispielsweise läßt sich das Metall auf ein flächenhaftes Polyparaphenylengebilde im Vakuum aufdampfen. Weiterhin läßt sich die Metallschicht durch Sputtern im Hochvakuum aufbringen.

Le A 21 849

- 8 -

Weiterhin kann die Metallisierung von flächenhaften Polyparaphenylen-Gebilden durch elektrolytisches oder stromloses Galvanisieren erfolgen. Daher kann die Metallschicht
bis 20 µm in die Polyparaphenylenschicht eindringen und
so besonders intensiven elektrischen Kontakt herstellen.
Zweckmäßigerweise dotiert man zu Beginn des elektrolytischen Metallisierungsvorgangs die hochohmige Polyparaphenylenschicht mit Jod oder einem anderen geeigneten
Dotierungsmittel, um die Leitfähigkeit der Polyparaphenylen-Schicht zu erhöhen. Dabei genügen meist Dotierungskonzentrationen zwischen 0,01 und 1 Mol %, bezogen auf eine Phenylen-Einheit. Besonders geeignete Metalle sind Au, Pt, Ag, Cu, Ni und Co.

Prinzipiell ist jedes Metall für den Verbund mit Polyparaphenylen geeignet. Besonders bevorzugt sind Au, Pt, Ag,
Ni, Co, Cu, Al, Fe, Se, B, W, Mo, Sn und Zn. Die Auswahl
des Kontaktmetalles richtet sich nach den Anforderungen.
Für eine beispielsweise stromzuführende oder -abführende
Kontaktfläche wählt man das Metall so, daß ein besonders
niederohmiger elektrischer Kontakt mit Ohmschem Charakter zum Polyparaphenylen entsteht. Eine Polyparaphenylen/
Au-Kontaktfläche erfüllt diese Anforderung besonders gut.
Hingegen besitzt ein Polyparaphenylen/Al-Kontakt einen
gleichrichtenden Charakter.

Der elektrische Verbund zum Polyparaphenylen kann auch
durch eine leitfähige Graphitschicht erzeugt werden, wodurch hohe Korrosionsbeständigkeit erzielt werden kann.

Le A 21 849

Für das Aufbringen von Halbleiter- oder Photoleiterschichten lassen sich Verfahren anwenden, die man allgemein als chemical oder physical vapor deposition bezeichnet.

Alle Verfahren zur Herstellung der Laminate bzw. flächenhaften Verbundelemente werden bevorzugt unter Schutzgasatmosphäre wie $N_2$ oder Ar durchgeführt.

Die erfindungsgemäßen Laminate können als elektrisch leitende oder halbleitende Bauelemente, z.B. in Flächenheizleitern, in elektronischen Devices, als Batterieelemente, für Kondensatoren oder für photovoltaische Wandler angewendet werden.

Auch als selektive Absorberflächen in photothermischen Wandlern sind Polyparaphenylen-Laminate geeignet.

Besonders bevorzugt ist die Verwendung der Polyparaphenylen-beschichteten Substrate als großflächiges Elektrodenmaterial für Speicherbatterien sowie als großflächige photoelektrische Wandler.

In den folgenden Beispielen wird Polyparaphenylen als PPP abgekürzt.

Le A 21 849

Ausführungsbeispiele

Beispiel 1:

In eine 2 1-Dreihalskolbenrührapparatur werden unter Argon 156 g (2 mol) Benzol und 67 g (0,5 mol) Aluminiumtrichlorid (wasserfrei) vorgelegt und 67 g (0,5 mol) Kupfer-II-chlorid (wasserfrei) zugesetzt. Die schwach exotherme Reaktion erreicht 32°C und klingt nach ca. 20 bis 25 Minuten ab.

Es wird 2 Stunden bei 32°C nachgerührt und auf 15°C abgekühlt. Das abgesaugte Reaktionsgemisch wird mit Benzol gewaschen und der dunkelviolette Rückstand in 1,4 1 halbkonzentrierte eiskalte Salzsäure eingerührt. Das Gemisch wird kurz aufgekocht, filtriert und mit Wasser gewaschen. Nach Zerkleinerung des Rohproduktes in Wasser wird abgesaugt und noch 3 mal mit 5oo ml halbkonzentrierter Salzsäure ausgekocht. Das hellbraune p-Polyphenylen wird mit kochendem dest. Wasser chloridionenfrei gewaschen und bei 110°C/14 Torr 4 Stunden über Phosphorpentoxid getrocknet. Ausbeute 12,5 g ≙ 65,8 % braunes Pulver, das faserförmige Teilchen enthält.

Um den Chlorgehalt zu vermindern, kann das Produkt 20 Stunden bei 400°C getempert werden.

|  | C | H | Cl | O |
|---|---|---|---|---|
| Ber.: | 94,701 % | 5,298 % |  |  |
| Gef.: Rohprodukt | 91,4 % | 5,0 % | 3,3 % | 0,75 % |
| Gef.: 20 h bei 400°C | 92,0 % | 5,1 % | 2,5 % | 0,2 % |

Le A 21 849

- 11 -

Das so erhaltene Produkt wird zur Herstellung einer Sprühsuspension in fein verteilter Form in einem geeigneten
Lösungsmittel suspendiert und gegebenenfalls dotiert.

Beispiel 2:

In eine 2 1-Dreihalskolbenrührapparatur werden unter
$N_2$ 469 g (6 mol) Benzol und 200 g (1,5 mol) Aluminiumtrichlorid (wasserfrei) vorgelegt und 101 g (0,75 mol)
Kupfer-II-chlorid zugesetzt.

Das Kupfer-II-chlorid wurde vorher bei 120°C im Hochvakuum über Phosphorpentoxid getrocknet.

Die schwach exotherme Reaktion erreicht 32°C und klingt
nach 20 bis 25 Minuten wieder ab.

Das Reaktionsgemisch wird noch 2 Stunden bei 32°C nachgerührt, dann auf 15°C gekühlt, abgesaugt, der Rückstand
mit Benzol gewaschen, mit 1,4 1 eiskalter halbkonzentrierter
Salzsäure versetzt, aufgekocht und abgesaugt. Der Rückstand wird mit Wasser im Mixer zerkleinert und noch 3 mal
mit 1,4 1 halbkonzentrierter Salzsäure ausgekocht. Das
hellbraune p-Polyphenylen wurde mit kochendem destilliertem Wasser chloridionenfrei gewaschen, über Phosphorpentoxid 5 Stunden bei 80°C/0,1 Torr getrocknet.
Ausbeute 25 g $\hat{=}$ 87,7 %
Um den Chlorgehalt zu vermindern, kann das Produkt bei
400°C getempert werden.

Le A 21 849

| | C | H | Cl | O |
|---|---|---|---|---|
| Ber.: | 94,701 % | 5,298 % | | |
| Gef.: Rohprodukt | 90,1 % | 5,1 % | 0,63 % | 3,8 % |
| Gef.: 30 Stunden bei 400°C | 93,0 % | 4,9 % | 0,26 % | 0,8 % |

Das so erhaltene Produkt wird zur Herstellung einer Sprühsuspension in fein verteilter Form in einem geeigneten Lösungsmittel suspendiert und gegebenenfalls dotiert.

Die Beispiele 3 - 9 beschreiben die Herstellung von Beschichtungen durch Besprühen eines Substrats mit einer Polyparaphenylen-Suspension.

Allgemeine Arbeitsweise für Beispiele 3 - 9:

Ausgangsprodukt für die Beschichtungsverfahren ist eine Suspension von Polyparaphenylenteilchen in einem Lösungsmittel.

PPP bedeutet im folgenden Polyparaphenylen.

<u>Beispiel 3:</u>

Eine 20 cm breite, 30 µm dicke Aluminiumfolie wird in einer Kammer unter Schutzgasatmosphäre von einer Rolle abgewickelt, wobei eine Folienseite in einem Abstand von 30 cm mit einer Geschwindigkeit von 1 mm/sec am PPP-Sprühkopf vorbeigeführt wird. Während des Sprühvorganges wurde der Sprühkopf auf- und abgesenkt, so daß eine homogene Massenbelegung ermöglicht wurde. Der Unter-

Le A 21 849

druck in der Kammer wurde so eingestellt, daß das Lösungsmittel Toluol nach Niederschlag auf der Substratoberfläche spontan verdampfte und eine PPP-Schicht auf der Folienoberfläche wachsen konnte. Die Schichtbildung war durch die Einstellung der Sprühstärke gut kontrollierbar. Der Zusammenhang zwischen Dicke der aufgesprühten PPP-Schicht und der Masse/Flächeneinheit war linear. Die Ausführungsbedingungen wurden so gewählt, daß die Polyparaphenylenschicht auf der Al-Folie eine Dicke von 200μm hatte und das Flächengewicht 5 mg/cm² betrug.

Beispiel 4:

Analog Beispiel 3 wurde eine Polycarbonatfolie mit PPP beschichtet. Als Lösungsmittel wurde $CH_2Cl_2$ eingesetzt. Dadurch wird erreicht, daß sich das Polycarbonat oberflächlich anlöst, was eine besonders gute Haftung der PPP-Teilchen auf der Polycarbonat-Oberfläche bewirkt. Die so hergestellte PPP-Schicht läßt sich z.B. mit Jod dotieren und zeigt bei einer Schichtdicke von 20μm einen Quadratwiderstand von 200 Ω.

Beispiel 5:

Analog Beispiel 3 wurde eine Polyamidfolie mit einer Suspension von PPP in Ameisensäure besprüht. Auch hier erhält man durch das Anlösen der Oberfläche eine ausgezeichnete Haftung der PPP-Teilchen auf dem Substrat. Nach dem Trocknen i.Vak. beträgt der Oberflächenwiderstand ohne weiteres Dotieren $3,5 \times 10^4$ Ω.

Le A 21 849

Beispiel 6

Bei einer einseitig mit Aluminium metallisierten Polycarbonatfolie wurde das Aluminium mit PPP beschichtet wie
in Beispiel 3.

Beispiel 7

Eine beidseitig mit Al beschichtete Polycarbonatfolie
wurde ebenfalls beidseitig mit PPP beschichtet wie in
Beispiel 3.

Beispiel 8

Eine 1 m lange, 30 cm breite und 20 µm dicke Polyethylenfolie, auf deren Längsseiten 2 Kontaktstreifen aus Alu aufgedampft waren, wurde mit Jod dotiertem PPP beschichtet
(300 µm) wie in Beispiel 3, wobei ein 2 cm breiter Randstreifen frei blieb. Anschließend wurde eine gut isolierende Teflonschicht über das ganze Flächengebilde gesprüht, so daß die PPP-Schicht von den beiden Kunststoffschichten ringsum eingeschlossen wurde. Die in dem Laminat liegende PPP-Schicht hatte eine quadratische Flächenleitfähigkeit von 80 Ohm. Bei einer angelegten Niederspannung von ca. 40 Volt konnte das Laminat auf ca. 35 -
45°C aufgewärmt und somit als Heizfolie verwendet werden.

Beispiel 9

Eine 1 m lange, 30 cm breite und 30 µm dicke Polyesterfolie wurde mit einem transparenten Leiter aus Indium-

Le A 21 849

Zinnoxid beschichtet und anschließend mit PPP beschichtet wie in Beispiel 3. Nach Dotieren mit Jod wurde auf die PPP-Schicht eine 20 µm dicke Folie aus Polyvinylidenchlorid aufkaschiert und so ein stabiler Verbund erreicht.

## Beispiel 10

Eine 1 m breite und 30 µm dicke Polycarbonatfolie wird von einer Rolle abgewickelt und unter einem Vorratsbehälter mit PPP-Suspension in $CH_2Cl_2$ und schlitzförmiger Öffnung und variabler Schlitzbreite entlanggeführt. Durch den Schlitz wurde ständig PPP-Suspension auf die Trägerfolie aufgebracht und durch ein nachgeschaltetes Rakelmesser glattgestrichen. Anschließend durchlief die beschichtete Polycarbonatfolie einen Wärmeofen mit Lösungsmittelabsaugung. Nach dem Trocknungsvorgang wurde eine Folie mit einem innigen Verbund zwischen der Polycarbonatfolie und der PPP-Schicht erhalten.

Le A 21 849

Patentansprüche

1. Mehrschichten-Flächengebilde, die mindestens eine Schicht aus gegebenenfalls dotiertem Polyparaphenylen und wenigstens eine Trägerschicht aus einem gegenüber Polyparaphenylen inertem Material enthalten.

2. Mehrschichten-Flächengebilde nach Anspruch 1, dadurch gekennzeichnet, daß das Trägermaterial ein organischer oder anorganischer, dotierter oder undotierter Halbleiter oder Leiter ist.

3. Mehrschichten-Flächengebilde nach Anspruch 1, dadurch gekennzeichnet, daß ein flächenhaftes Trägermaterial beidseitig mit Polyparaphenylen beschichtet ist.

4. Verfahren zur Herstellung von Mehrschichten-Flächengebilde nach Anspruch 1, dadurch gekennzeichnet, daß man auf die Trägerschicht eine Suspension von faser- oder "kletten"-förmigem Polyparaphenylen aufsprüht und das Suspensionsmittel entfernt.

5. Verfahren nach Anspruch 4, dadurch gekennzeichnet, daß man auf das Trägermaterial eine Suspension von pulverförmigem Polyparaphenylen in einem das Substrat anlösenden Suspendiermittel aufsprüht und das Suspendiermittel entfernt.

6. Verwendung der Mehrschichten-Flächengebilde nach Anspruch 1 als elektrische Flächenleiter oder als Elektroden.

Le A 21 849